# EUROPÄISCHE PATENTSCHRIFT

(11) **EP 0 955 103 B1**
(45) Veröffentlichungstag und Bekanntmachung des Hinweises auf die Patenterteilung: **07.01.2004**
(21) Anmeldenummer: 99108386.6
(22) Anmeldetag: 29.04.1999
(51) Int. Cl.: B08B 9/04, F16L 55/38

(54) **Rohrleitungsfahrzeug mit Bypass zur Geschwindigkeitssteuerung**
Pipeline pig with a speed control bypass
Véhicule pouvant se déplacer dans une canalisation muni d un bypass pour le réglage de sa vitesse

(30) Priorität: 07.05.1998 DE 19820290
(43) Veröffentlichungstag der Anmeldung: 10.11.1999
(73) Patentinhaber: PII Pipetronix GmbH, 76297 Stutensee (DE)
(72) Erfinder: Richter, Thomas, 76351 Linkenheim (DE); Günter, Frank Dr., 76228 Karlsruhe (DE); Bremner, George Franklyn, Sutton W / Ontario LOEIRO (CA); Comello, Corry, Scarborough, Ontario M1R 4M9 (CA)
(74) Vertreter: Lempert, Jost, Dipl.-Phys. Dr. rer.nat.

(56) Entgegenhaltungen:
- EP-A- 0 065 049
- WO-A-97/17566
- US-A- 3 088 491

## Beschreibung

Die Erfindung betrifft ein Rohrleitungsfahrzeug, das mit einem Förderfluidstrom in der Rohrleitung bewegbar ist, mit einem eine Mantelfläche aufweisenden Gehäuse, mit zumindest einem außenseitigen, ringförmigen Dichtelement sowie mit zumindest einer Einlaßöffnung und zumindest einer Auslaßöffnung an dem Gehäuse vor und hinter dem Dichtelement zur Bildung eines Bypasses.

Rohrleitungsfahrzeuge dieser Art, die auch als Molche bezeichnet werden, finden Anwendung bei der Inspektion oder Reinigung von Pipelines, was vor allem bei Pipelines wichtig ist, in denen giftige oder gefährliche Gase oder Flüssigkeiten, wie Erdgas oder flüssige Erdölprodukte, transportiert werden.

Ein Rohrleitungsfahrzeug wie vorstehend beschrieben kann das Reinigungs- oder Inspektionsfahrzeug selbst sein oder als Zugfahrzeug oder -modul für dieses dienen.

Die Rohrleitungsfahrzeuge weisen an ihrem Gehäuse üblicherweise ringförmige Dichtelemente auf, die den Spalt zwischen dem Gehäuse und der Rohrleitungsinnenwand abdichten, wobei durch den entsprechenden Druckaufbau das Rohrleitungsfahrzeug angetrieben wird. Die maximale Arbeitsgeschwindigkeit des Rohrleitungsfahrzeugs selbst oder der von ihm gezogenen Reinigungs- oder Inspektionseinheit liegt in der Regel deutlich unter der Strömungsgeschwindigkeit des zu fördernden Mediums, so daß sich das Fahrzeug langsamer als die Fluidströmung bewegen muß. Da aus betriebswirtschaftlichen Erwägungen eine Druckabsenkung in der Rohrleitung zur Reduzierung der Strömungsgeschwindigkeit bei Durchführung der notwendigen Reparatur- oder Inspektionsarbeiten nicht sinnvoll ist, muß die Geschwindigkeit des Rohrleitungsfahrzeugs gegenüber der Strömungsgeschwindigkeit durch entsprechende Maßnahmen reduziert werden.

Dazu wurden mehrere Möglichkeiten vorgeschlagen, die auf das Rohrleitungsfahrzeug, gegebenenfalls als Zugmodul eines Reinigungs- oder Inspektionsfahrzeugs, wirkende Antriebskraft mittels eines die Dichtelemente umgehenden Bypasses im Inneren des Gehäuses zu reduzieren.

Der Durchfluß durch das Gehäuse kann dabei sowohl durch Röhren weitgehend parallel zur Längsachse des Rohrleitungsfahrzeugs (CA 2042338, EP 0 065 049 B1) wie auch durch eine oder mehrere Öffnungen an der Rückseite des Rohrleitungsfahrzeugs (WO 97/17566) ermöglicht werden.

Die wirksame Durchflußquerschnittsfläche des Bypasses kann dabei durch Ventilkappen in den Röhren (EP 0 065 049 B1) oder durch zwei hintereinander angeordnete dichte Elemente, an denen jeweils Durchbrüche angeordnet sind, die durch Verdrehen der Elemente gegeneinander zur Deckung gebracht werden können (CA 2042338, WO 97/17566), verändert werden. Diese Veränderungen können über Kontroll- und Steuerungseinrichtungen vorgenommen werden, die die tatsächliche Geschwindigkeit des Rohrleitungsfahrzeugs aufnehmen und durch entsprechende Änderungen der Durchflußquerschnittsfläche an die Sollgeschwindigkeit annähern.

Nachteilig bei diesen bekannten Ausführungsformen ist einerseits der konstruktive Aufwand, der durch die Röhren bzw. die in jeder Röhre notwendigen Verschlußelemente entsteht, und andererseits die ungünstige Fluiddynamik beim Strömungseintritt an der hinteren Stirnseite.

Der Erfindung liegt die Aufgabe zugrunde, ein Rohrleitungsfahrzeug so auszubilden, daß eine einfache und sichere Regelung der Geschwindigkeit möglich ist, ohne daß die vorgenannten Nachteile auftreten.

Diese Aufgabe wird bei einem Rohrleitungsfahrzeug gemäss Anspruch 1.

Mit dem Verschlußelement zum Verschließen der zumindest einen Einlaßöffnung kann der Bypass geschlossen bzw. die durch ihn fließende Fluidmenge geregelt und der das Rohrleitungsfahrzeug antreibende Druck an der in Fahrtrichtung rückwärtigen Seite des Rohrleitungsfahrzeugs erhöht werden. Durch die Anordnung der Einlaßöffnung für die Bypass-Strömung und des Verschlußelements für diese in bzw. an der Mantelwand ergeben sich geringere Verstellkräfte zum Verstellen des Verschlußelements; auch ist dieses verschmutzungsunempfindlich.

Weiterhin bevorzugt erfolgt das Verschieben stufenlos, um die zumindest eine Öffnung genau einstellen zu können, womit weiter mit Vorteil das Verschlußelement selbst ein Teil der Mantelfläche des Gehäuses ist und sich somit in dieses einfügt.

Zur Betätigung des zumindest einen Verschlußelements sind in bevorzugter Ausführung Steuerungsvorrichtungen vorgesehen, mit denen das Verschieben des Verschlußelements möglich ist.

Während die Stelleinrichtungen grundsätzlich elektrische sein können, sind sie bevorzugt pneumatische oder hydraulische.

Weiterhin bevorzugt weist das Rohrleitungsfahrzeug Meßund Regelungsorgane zum Einregeln einer vorgegebenen Sollgeschwindigkeit auf. Mit den Meßorganen wird dabei die aktuelle Geschwindigkeit des Rohrleitungsfahrzeugs bestimmt, mit der vorgegebenen Sollgeschwindigkeit verglichen und durch entsprechende Maßnahmen auf diese eingeregelt.

Mit Vorteil stehen die Meßorgane des Rohrleitungsfahrzeugs dabei in mechanischem Kontakt mit der Rohrleitungswand, um unabhängig von der Strömungsgeschwindigkeit des Fluids die absolute Geschwindigkeit des Rohrleitungsfahrzeugs zu bestimmen. Dieser mechanische Kontakt erfolgt bevorzugt durch Meßräder, mit denen konstruktiv einfach und bei geringer Störanfälligkeit die Geschwindigkeit bestimmt werden kann.

Weiterhin bevorzugt sind die Meßorgane und Steuerungsvorrichtungen axial zwischen zwei der Dichtelemente angeordnet, so daß sie keine Verwirbelungen innerhalb des strömenden Fluids verursachen.

In weiterhin vorteilhafter Ausführung sind die Austrittsöffnungen des Rohrleitungsfahrzeugs an der Stirnseite ausgebildet, durch die das das Gehäuse mit größerer Geschwindigkeit durchfließende Förderfluid dieses strömungsgünstig wieder verlassen kann.

Mit Vorteil sind die Austrittsöffnungen an der Stirnseite durch radiale Streben gegeneinander abgegrenzt, die die Stirnseite des Rohrleitungsfahrzeugs in kleinere, symmetrische Segmente unterteilen.

Weiterhin bevorzugt sind die Austrittsöffnungen jeweils durch um die Streben schwenkbare Verschlußelemente verschließbar. Dies gewährleistet einen zweiten, von den Verschlußelementen an den Einlaßöffnungen unabhängigen Schließmechanismus, der u.a. bei einem Stillstand des Rohrleitungsfahrzeugs oder nach einer vordefinierten Zeit zum Einsatz kommt.

Gemäß vorteilhafter Ausführung ist die Verschwenkrichtung der Verschlußelemente die Strömungsrichtung des Fluids, so daß beim Schließen derselben keine zusätzliche Kraft aufzuwenden ist.

Weiterhin mit Vorteil sind die Verschlußelemente in Öffnungsstellung durch Magnethalterungen gesichert. Dies gewährleistet einen sicheren Halt in der Öffnungsstellung sowie ein schnelles Freigeben der Verschlußelemente, wobei des weiteren mit Vorteil eine Freigabeeinrichtung vorgesehen ist.

Gemäß einer bevorzugten Weiterbildung weisen die Verschlußelemente durch unter Federwirkung stehende Klappen verschließbare Durchbrüche auf. Die Durchbrüche in den Verschlußelementen verkleinern die angeströmte Fläche der Verschlußelemente, so daß beim Öffnen der federbelasteten Klappen unter dem Druckstoß beim Verschließen der Verschlußelemente dieser Druckstoß abgebaut wird und so Beschädigungen an den Verschlußelementen oder deren Anschlagflächen am Gehäuse vermieden werden. Bei Unterschreitung eines bestimmten Anströmdrucks verschließen die Klappen unter Federwirkung die Durchbrüche an den Verschlußelementen.

Nachstehend ist die Erfindung anhand von in der Zeichnung wiedergegebenen Ausführungsbeispielen beschrieben. Dabei zeigt:
- Fig. 1: im Längsschnitt eine erste Ausführungsform eines Rohrleitungsfahrzeugs; und
- Fig. 2: schematisch eine andere Ausführungsform eines Rohrleitungsfahrzeugs.

Ein erfindungsgemäßes Rohrleitungsfahrzeug 1 weist ein zylindrisches Gehäuse 2 mit einer Mantelwand 2a und zwischen diesem und der nur angedeuteten Rohrleitungsinnenwand 3 angeordneten ringförmigen Dichtmanschetten 4 auf. Über ein Kupplungselement 1' kann das dargestellte erfindungsgemäße Rohrleitungsfahrzeug 1 als Zugmodul weitere Module eines Reinigungs- oder Inspektionsmolches ziehen. Die ringförmigen Dichtmanschetten 4 weisen jeweils einen nach hinten geneigten Abschnitt 4a und zusätzlich einen gegenüber diesem abgewinkelten, nach hinten ragenden und unter Druck an der Rohrleitungsinnenwand anliegenden Abschnitt 4b auf, der die Dichtfunktion gegenüber der Rohrleitungswand 3 und damit den zum Vortrieb notwendigen Druckaufbau an der Anströmseite der Dichtmanschetten 4 sicherstellt.

An der Mantelwand 2a des zylindrischen Gehäuses 2 sind zwischen zwei ringförmigen Dichtelementen 4 federvorgespannte Räder 7 angeordnet, so daß sie in ständigem Kontakt mit der Rohrleitungsinnenwand stehen und die Beabstandung des Gehäuses 2 zu der Rohrleitungswand gewährleisten. Zumindest eines der Räder 7 ist dabei als Meßrad zur Aufnahme der Absolutgeschwindigkeit des Rohrleitungsfahrzeugs 1 ausgebildet.

Das zylindrische Gehäuse 2 ist weitgehend als Hohlzylinder ausgebildet, der zumindest einen Bypass für das Fluid bildet, dessen Strömungsgeschwindigkeit in der Regel deutlich höher als die maximale Arbeitsgeschwindigkeit des Rohrleitungsfahrzeugs liegt.

Zum Öffnen des Bypasses weist das Rohrleitungsfahrzeug eine Einlaßöffnung 9 und zumindest eine Auslaßöffnung 10 an der Stirnseite des Rohrleitungsfahrzeugs auf. Die Einlaßöffnung 9 ist dabei in Fahrtrichtung hinter der hintersten Dichtmanschette 4 in der Mantelfläche des zylindrischen Gehäuses 2 angeordnet. Dabei ist die Einlaßöffnung 9 durch ein parallel zu der Mantelfläche des zylindrischen Gehäuses 2 verschiebliches, ringförmiges Verschlußelement 11 verschließbar. Die Verschiebung des mit der Mantelfläche des Gehäuses 2 weitestgehend fluchtenden Verschlußelements 11 erfolgt durch Stelleinrichtungen 12, mit denen das Element 11 stufenlos verschoben und die Einlaßöffnung 9 zwischen einem Zustand der vollständigen Öffnung und des vollständigen Verschlusses variiert werden kann. Die Stelleinrichtungen 12 sind im dargestellten Ausführungsbeispiel als das Verschlußelement 11 verschiebende Hydraulik- oder Pneumatikzylinder ausgebildet.

Durch nicht dargestellte Regelungseinrichtungen werden die Stelleinrichtungen 12 in Abhängigkeit von dem ermittelten Ist-Wert der Geschwindigkeit des Rohrleitungsfahrzeugs so betätigt, daß über die Einlaßöffnung 9 und damit über den Bypassstrom die Geschwindigkeit des Rohrleitungsfahrzeugs an einen vorgegebenen Sollwert angepaßt werden kann.

Zusätzlich sind auch die Austrittsöffnungen 10 durch Verschlußelemente 13 verschließbar, die an Radialstreben 20 verschwenkbar angeordnet sind, die zwischen dem zylindrischen Gehäuse 2 und einem auf der Längsachse des Rohrleitungsfahrzeugs angeordneten zylindrischen Bauteil 21 angeordnet sind. Der Verschluß des Bypasses führt zu einem Druckanstieg hinter dem Rohrleitungsfahrzeug und somit zu einem Ansteigen der das Rohrleitungsfahrzeug beschleunigenden Kraft. Die Verschlußelemente 13 sind in ihrer Öffnungsstellung durch Magnethalterungen gehalten, die beispielsweise per Funk oder zeitgesteuert auslösbar sind. Die Verschlußelemente 13 sind in ihrer Öffnungsstellung gegen die Strömungsrichtung des Fluids verschwenkt und stehen parallel zu dieser, so daß sie nach Auslösung der Magnethalterungen durch die Fluidströmung in ihre Schließstellung verschwenkt werden.

In dem dargestellten Ausführungsbeispiel weisen die Verschlußelemente 13 wiederum durch Klappen 15 verschließbare Durchbrüche 14 auf. Die Klappen 15 sind dabei schwenkbar an den Verschlußelementen 13 angeordnet und stehen unter einer Federkraft 15a, die in Schließrichtung der Klappen 15 wirkt.

Beim Schließen der Verschlußelemente 13 insbesondere in dem Fall, in dem das Rohrleitungsfahrzeug in der Rohrleitung festsitzt und durch Schließen der Segmente 13 wieder in Bewegung gesetzt werden soll, öffnen sich die Klappen 15 unter dem hierbei auftretenden Druckstoß entgegen der Wirkung der auf sie einwirkenden Federn; die so geöffneten Durchbrüche 14 bauen den einwirkenden Druckstoß ab. Beschädigungen an den Verschlußelementen 13 oder an deren Anschlagflächen am Gehäuse werden vermieden. Wenn sich das Rohrleitungsfahrzeug wieder in Bewegung gesetzt hat, werden die Durchbrüche 14 durch die federbelasteten Klappen 15 verschlossen, um die Vortriebskraft zu erhöhen.

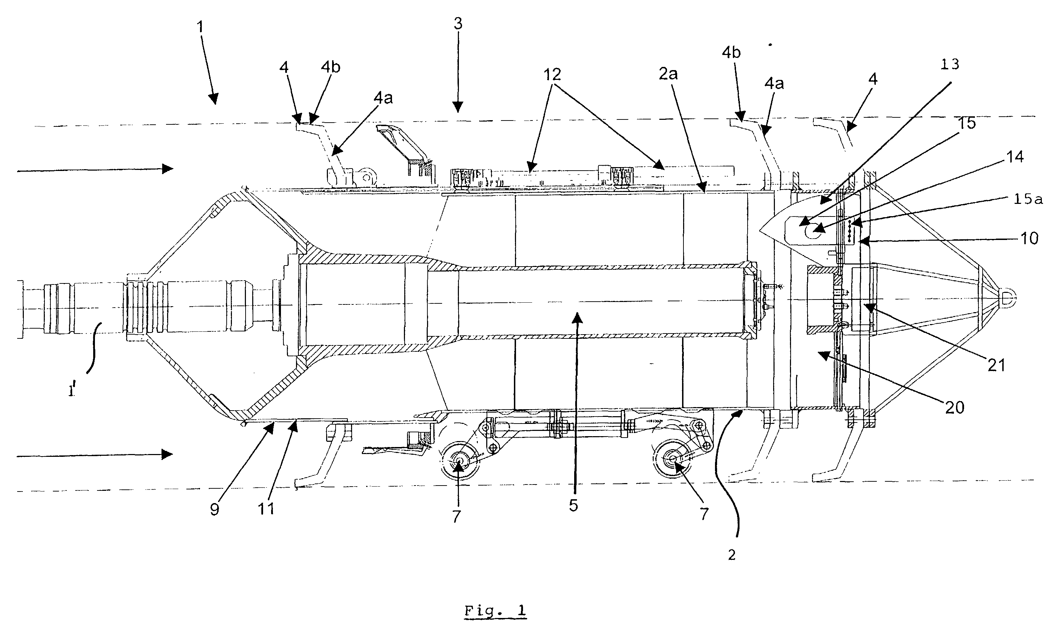

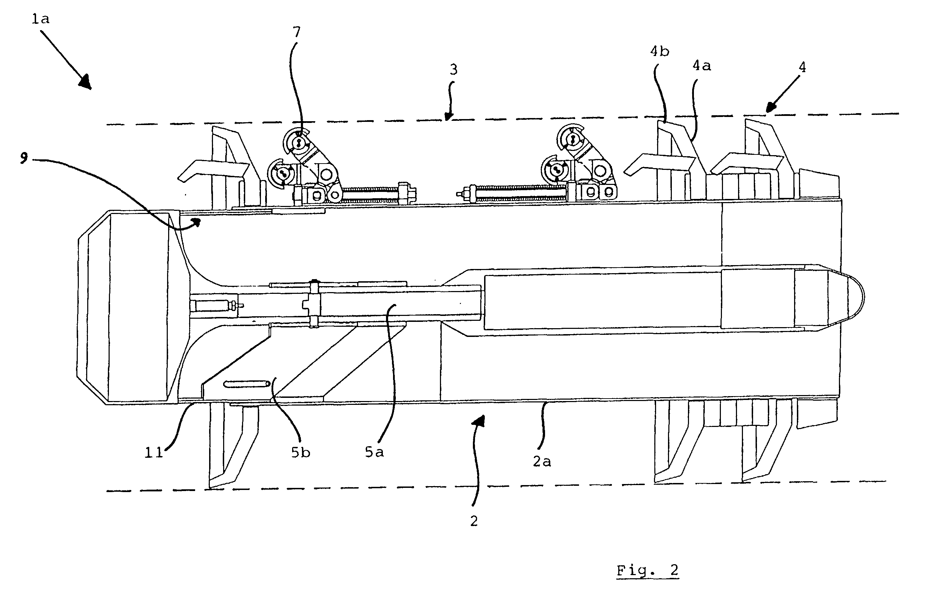

Die mehr schematisch dargestellte Ausführungsform eines Rohrleitungsfahrzeugs 1a gemäß Fig. 2 unterscheidet sich vom Rohrleitungsfahrzeug der Fig. 1 im wesentlichen dadurch, daß nicht Stelleinrichtungen am Umfang und außerhalb des Gehäuses 2 des Rohrleitungsfahrzeugs 1a angeordnet sind, sondern sich vielmehr eine zentrale Stelleinrichtung 5a mittig im Gehäuse 2 befindet. Diese ist über achsparallele Finnen 5b mit einem die im Gehäusemantel 2a ausgebildete Mantelöffnung 9 verschließenden ringförmigen Verschlußelement 11 verbunden, so daß sie dieses bewegen kann. Weitere Elemente des Rohrleitungsfahrzeugs 1a der Fig. 2 sind mit gleichen Bezugszeichen wie in Fig. 1 bezeichnet.

## Patentansprüche

1. Rohrleitungsfahrzeug, das mit einem Förderfluidstrom in einer Rohrleitung bewegbar ist, mit einem eine Mantelfläche aufweisenden Gehäuse, mit zumindest einem außenseitigen, ringförmigen Dichtelement sowie mit zumindest einer Einlassöffnung und zumindest einer Auslassöffnung an dem Gehäuse vor und hinter dem Dichteelement zur Bildung eines Bypasses, wobei die zumindest eine mit einem Verschlusselement verschließbare Einlassöffnung (9) an der Mantelwand (2a) des zylindrischen Gehäuses (2) angeordnet ist, **dadurch gekennzeichnet, dass** das zumindest eine Verschlusselement axial und parallel zu der Mantelfläche des zylindrischen Gehäuses (2) des Rohrleitungsfahrzeugs (1) verschieblich ist.

2. Rohrleitungsfahrzeug nach Anspruch 1, **dadurch gekennzeichnet, daß** das Verschlußelement Teil der Mantelfläche des zylindrischen Gehäuses (2) ist.

3. Rohrleitungsfahrzeug nach einem der Ansprüche 1 oder 2, **dadurch gekennzeichnet, daß** das zumindest eine Verschlußelement stufenlos verschieblich ist.

4. Rohrleitungsfahrzeug nach einem der Ansprüche 1 bis 3, **dadurch gekennzeichnet, daß** das Rohrleitungsfahrzeug Stelleinrichtungen (12) zur Betätigung des zumindest einen Verschlußelements aufweist.

5. Rohrleitungsfahrzeug nach Anspruch 4, **dadurch gekennzeichnet, daß** die Stelleinrichtungen (12) pneumatische oder hydraulische sind.

6. Rohrleitungsfahrzeug nach einem der Ansprüche 1 bis 5, **gekennzeichnet durch** Geschwindigkeits-Meßorgane.

7. Rohrleitungsfahrzeug nach Anspruch 6, **dadurch gekennzeichnet, daß** die Meßorgane in Kontakt mit der Rohrleitungsinnenwand angeordnet sind.

8. Rohrleitungsfahrzeug nach Anspruch 6 oder 7, **dadurch gekennzeichnet, daß** die Meßorgane Meßräder (7) aufweisen.

9. Rohrleitungsfahrzeug nach einem der Ansprüche 4 bis 8, **dadurch gekennzeichnet, daß** Meßorgane und Steuerungsvorrichtungen axial zwischen zwei Dichtelementen angeordnet sind.

10. Rohrleitungsfahrzeug nach einem der Ansprüche 1 bis 9, **dadurch gekennzeichnet, daß** die Austrittsöffnungen (10) an der vorderen Stirnseite des Gehäuses ausgebildet sind.

11. Rohrleitungsfahrzeug nach einem der Ansprüche 1 bis 10, **dadurch gekennzeichnet, daß** die Austrittsöffnungen (10) durch radiale Streben (20) gegeneinander abgegrenzt sind.

12. Rohrleitungsfahrzeug nach einem der Ansprüche 1 bis 11, **dadurch gekennzeichnet, daß** die Austrittsöffnungen durch schwenkbare Verschlußelemente (13) verschließbar sind.

13. Rohrleitungsfahrzeug nach Anspruch 12, **dadurch gekennzeichnet, daß** die Verschlußelemente (13) an den Austrittsöffnungen um die Radialstreben (20) verschwenkbar sind.

14. Rohrleitungsfahrzeug nach Anspruch 12 oder 13, **dadurch gekennzeichnet, daß** die Verschwenkrichtung der Verschlußelemente (13) beim Schließen die Strömungsrichtung ist.

15. Rohrleitungsfahrzeug nach einem der Ansprüche 12 bis 14, **dadurch gekennzeichnet, daß** die Verschlußelemente (13) in Öffnungsstellung durch Magnethalterungen gesichert sind.

16. Rohrleitungsfahrzeug nach einem der vorangehenden Ansprüche, **dadurch gekennzeichnet, daß** die Verschlußelemente eine Freigabeeinricthung aufweisen.

17. Rohrleitungsfahrzeug nach einem der Ansprüche 12 bis 16, **dadurch gekennzeichnet, daß** die Verschlußelemente (13) durch unter Federwirkung stehende Klappen (15) verschließbare Durchbrüche (14) aufweisen.

## Claims

1. Pipe conduit vehicle which can be moved in pipe conduits via a transport fluid flow, with a housing having an outer surface, with at least one ring-shaped outer sealing element as well as with at least one inlet opening and at least one outlet opening in the housing in front of and behind the sealing element for forming a bypass, wherein the at least one inlet opening (9) which can be closed by a closing element is disposed on the outer wall (2a) of the cylindrical housing (2), **characterized in that** the at least one closing element can be displaced axially and parallel to the outer surface of the cylindrical housing (2) of the pipe conduit vehicle (1).

2. Pipe conduit vehicle according to claim 1, **characterized in that** the closing element is part of the outer surface of the cylindrical housing (2).

3. Pipe conduit vehicle according to any one of the claims 1 or 2, **characterized in that** the at least one closing element can be displaced in a continuous fashion.

4. Pipe conduit vehicle according to any one of the claims 1 through 3, **characterized in that** the pipe conduit vehicle comprises actuators (12) for operating the at least one closing element.

5. Pipe conduit vehicle according to claim 4, **characterized in that** the actuators (12) are pneumatic or hydraulic.

6. Pipe conduit vehicle according to any one of the claims 1 through 5, **characterized by** velocity measuring members.

7. Pipe conduit vehicle of claim 6, **characterized in that** measuring members are disposed in contact with the inner wall of the pipe conduit.

8. Pipe conduit vehicle according to claim 6 or 7, **characterized in that** the measuring members comprise measuring wheels (7).

9. Pipe conduit vehicle according to any one of the claims 4 through 8, **characterized in that** measuring members and control members are disposed axially between two sealing elements.

10. Pipe conduit vehicle according to any one of the claims 1 through 9, **characterized in that** the outlet openings (10) are formed on the end side of the housing.

11. Pipe conduit vehicle according to any one of the claims 1 through 10, **characterized in that** the outlet openings (10) are delimited with respect to each other by radial braces (20).

12. Pipe conduit vehicle according to any one of the claims 1 through 11, **characterized in that** the outlet openings can be closed by closing elements (13) which can pivot.

13. Pipe conduit vehicle according to claim 12, **characterized in that** the closing elements (13) can pivot at the outlet openings about the radial braces (20).

14. Pipe conduit according to claim 12 or 13, **characterized in that** the pivot direction of the closing elements (13) during closing is the same as the flow direction.

15. Pipe conduit vehicle according to any one of the claims 12 through 14, **characterized in that** the closing elements (13) are secured in the opened position by means of magnet holders.

16. Pipe conduit vehicle according to any one of the preceding claims, **characterized in that** the closing elements have a release mechanism.

17. Pipe conduit vehicle according to any one of the claims 12 through 16, **characterized in that** the closing elements (13) have openings (14) which can be closed by spring-loaded flaps (15).

## Revendications

1. Véhicule de canalisation pouvant se déplacer dans une canalisation au moyen d'un courant de fluide de transport, comportant un carter présentant une surface enveloppe et présentant au moins un élément extérieur et annulaire d'étanchéité ainsi qu'au moins une ouverture d'admission et au moins une ouverture d'évacuation sur le carter à l'avant et derrière l'élément d'étanchéité pour former une dérivation, véhicule dans lequel l'au moins une ouverture d'admission (9) verrouillable par un élément de fermeture est ménagée dans la surface enveloppe (2a) du carter cylindrique (2), **caractérisé en ce que** l'au moins un élément de fermeture est déplaçable axialement et parallèlement à la surface enveloppe du carter cylindrique (2) du véhicule (1) de canalisation.

2. Véhicule de canalisation selon la revendication 1, **caractérisé en ce que** l'élément de fermeture est une partie de la surface enveloppe du carter cylindrique (2).

3. Véhicule de canalisation selon l'une quelconque des revendications 1 ou 2, **caractérisé en ce que** l'au moins un élément de fermeture peut être déplacé en continu.

4. Véhicule de canalisation selon l'une quelconque des revendications 1 à 3, **caractérisé en ce que** le véhicule de canalisation présente des dispositifs de réglage (12) pour l'actionnement de l'au moins un élément de fermeture.

5. Véhicule de canalisation selon la revendication 4, **caractérisé en ce que** les dispositifs de réglage (12) sont pneumatiques ou hydrauliques.

6. Véhicule de canalisation selon l'une quelconque des revendications 1 à 5, **caractérisé par** des organes de mesure de la vitesse.

7. Véhicule de canalisation selon la revendication 6, **caractérisé en ce que** les organes de mesure sont disposés en contact avec la paroi intérieure de la canalisation.

8. Véhicule de canalisation selon la revendication 6 ou 7, **caractérisé en ce que** les organes de mesure présentent des capteurs de mesure à galet (7).

9. Véhicule de canalisation selon l'une quelconque des revendications 4 à 8, **caractérisé en ce que** les organes de mesure et les dispositifs de commande sont disposés axialement entre deux éléments d'étanchéité.

10. Véhicule de canalisation selon l'une quelconque des revendications 1 à 9, **caractérisé en ce que** l'ouverture d'évacuation (10) est conformée sur la face frontale avant du carter.

11. Véhicule de canalisation selon l'une quelconque des revendications 1 à 10, **caractérisé en ce que** les ouvertures d'évacuation (10) sont délimitées entre elles par des entretoises radiales (20).

12. Véhicule de canalisation selon l'une quelconque des revendications 1 à 11, **caractérisé en ce que** les ouvertures d'évacuation sont verrouillables par des éléments de fermeture (13) basculants.

13. Véhicule de canalisation selon la revendication 2, **caractérisé en ce que** les éléments de fermeture (13) au niveau des ouvertures d'évacuation sont basculables autour des entretoises radiales (20).

14. Véhicule de canalisation selon la revendication 12 ou 13, **caractérisé en ce que** le sens de basculement des éléments de fermeture (13) correspond pour la fermeture au sens du courant.

15. Véhicule de canalisation selon l'une quelconque des revendications 12 à 14, **caractérisé en ce que** les éléments de fermeture (13) sont bloqués en position d'ouverture par des attaches magnétiques.

16. Véhicule de canalisation selon l'une quelconque des revendications précédentes, **caractérisé en ce que** les éléments de fermeture présentent un dispositif de déverrouillage.

17. Véhicule de canalisation selon l'une quelconque des revendications 1 à 16, **caractérisé en ce que** les éléments de fermeture (13) présentent des ouvertures (14) verrouillables par des clapets (15) sous action élastique.
